# EUROPÄISCHE PATENTSCHRIFT

(11) **EP 4 726 673 B1**
(45) Veröffentlichungstag und Bekanntmachung des Hinweises auf die Patenterteilung: **30.09.2026**
(21) Anmeldenummer: 24205386.6
(22) Anmeldetag: 08.10.2024
(51) Int. Cl.: G06V 10/82, G06Q 10/08, G06V 20/62, G06V 20/70, G06V 30/413, G06V 30/424

(54) **VERFAHREN ZUM ANONYMISIEREN PERSONENBEZOGENER DATEN**
METHOD FOR ANONYMISING PERSONAL DATA
PROCÉDÉ D'ANONYMISATION DE DONNÉES RELATIVES À DES PERSONNES

(43) Veröffentlichungstag der Anmeldung: 15.04.2026
(73) Patentinhaber: SICK AG, 79183 Waldkirch (DE)
(72) Erfinder: WEBER, Oliver, 79183 Waldkirch (DE)
(74) Vertreter: Manitz Finsterwald Patent- und Rechtsanwaltspartnerschaft mbB

(56) Entgegenhaltungen:
- WO-A1-2021/110226
- US-A1- 2019 354 919
- US-A1- 2023 367 904
- US-A1- 2024 119 177
- MICROSOFT: "Presidio Image Redactor Python API - Microsoft Presidio", 20 September 2024 (2024-09-20), XP093259831, Retrieved from the Internet <URL:https://web.archive.org/web/20240920092254/https://microsoft.github.io/presidio/api/image_redactor_python/> [retrieved on 20250314]
- BIESNER DAVID ET AL: "Anonymization of German financial documents using neural network-based language models with contextual word representations", vol. 13, no. 2, 2 October 2021 (2021-10-02), pages 151 - 161, XP093259863, ISSN: 2364-415X, Retrieved from the Internet <URL:https://link.springer.com/article/10.1007/s41060-021-00285-x/fulltext.html> [retrieved on 20250314], DOI: 10.1007/s41060-021-00285-x
- HAVRILLA MARC: "Integration of Deep Computer Vision Foundation Models for Document Interpretation and Anonymisation", 12 January 2024 (2024-01-12), Rapperswil-Jona, pages 1 - 68, XP093259862, Retrieved from the Internet <URL:https://eprints.ost.ch/id/eprint/1163> [retrieved on 20250314]
- ANONYMOUS: "GitHub - open-mmlab/mmocr: OpenMMLab Text Detection, Recognition and Understanding Toolbox", 22 September 2024 (2024-09-22), XP093260001, Retrieved from the Internet <URL:https://web.archive.org/web/20240922160709/https://github.com/open-mmlab/mmocr> [retrieved on 20250314]
- NISHANT SUBRAMANI ET AL: "A Survey of Deep Learning Approaches for OCR and Document Understanding", ARXIV.ORG, CORNELL UNIVERSITY LIBRARY, 201 OLIN LIBRARY CORNELL UNIVERSITY ITHACA, NY 14853, 5 February 2021 (2021-02-05), XP081875718
- ALEXANDER NAUMANN ET AL: "Literature Review: Computer Vision Applications in Transportation Logistics and Warehousing", ARXIV.ORG, CORNELL UNIVERSITY LIBRARY, 201 OLIN LIBRARY CORNELL UNIVERSITY ITHACA, NY 14853, 12 April 2023 (2023-04-12), XP091482818

## Beschreibung

Die Erfindung betrifft ein computerimplementiertes Verfahren zum Anonymisieren personenbezogener Daten für eine Industrieanlage, insbesondere für eine Industrieanlage im Logistikbereich.

Personenbezogene Daten umfassen beispielsweise einen Personennamen, einen Straßennamen, eine Hausnummer und/oder einen Wohnort oder dergleichen. Die Person ist beispielsweise ein Absender oder Empfänger von Fracht oder Post, insbesondere eines Pakets oder Briefs. Die Industrieanlage ist beispielsweise zumindest ein Teil eines Track- und Trace-Systems im Logistikbereich. Personenbezogene Daten stellen sensible Informationen über eine Person dar und unterliegen in der Regel datenschutzrechtlichen Bestimmungen. Entsprechend können Bilddaten von Fracht oder Post, die durch die Industrieanlage erfasst werden, aus datenschutzrechtlichen Gründen nicht ohne weiteres gespeichert und genutzt werden, da sie personenbezogene Daten enthalten können. Die Daten stehen dann nicht zur Steuerung und/oder Verbesserung der Industrieanlage zur Verfügung, was nachteilig ist.

XP093259831 (Microsoft: "Presidio Image Redactor Python API - Microsoft Presidio" 20. September 2024 (2024-09-20)) offenbart ein Pythonmodul, mit dem Text in einem Bild-File erkannt wird, der Text auf sensitive Informationen geprüft wird, die Informationen auf Bildkoordinaten abgebildet werden, um Bounding-Boxen zu generieren und die Informationen in einer Kopie des Original-Files geschwärzt werden. WO 2021/110226 A1 beschreibt ein Verfahren, bei dem Bilder einer Industriellen Umgebung erhalten werden, Objekte wie z.B. Personen in den Bildern erkannt werden und die Objekte aus den Bildern entfernt werden, um eine anonymisierte Version der Bilder zu generieren. BIESNER DAVID et al. ("Anonymization of German financial documents using neural network-based language models with contextual word representations", International Journal of Data Science and Analytics, Bd. 13, Nr. 2, 2. Oktober 2021, Seiten 151-161, XP093259863, ISSN: 2364-415X, DOI: 10.1007/s41060-021-00285-x) offenbart einen Arbeitsablauf zur Anonymisierung eines Dokuments mithilfe der Erkennung benannter Entitäten, wobei zunächst sensible Entitäten mithilfe von Deep-Learning-Methoden und regelbasierter Nachbearbeitung identifiziert werden und anschließend die identifizierten Entitäten durch geeignete Tags ersetzt werden, um die Textstruktur zu erhalten, oder hinter einem allgemeinen anonymisierten Tag verborgen werden. HAVRILLA MARC ("Integration of Deep Computer Vision Foundation Models for Document Interpretation and Anonymisation", 12. Januar 2024 (2024-01-12), Seiten 1-68, XP093259862) lehrt das Erkennen von Text in einem Dokument, das Anwenden eines Named-Entity-Recognition (NER)-Transformer-Models zum Erkennen von Personennamen in dem Text und das Ersetzen der Personennamen mit einer willkürlich generierten Zeichenfolge, um ein anonymisiertes Dokument zu erzeugen. US 2024/119177 A1 bezieht sich auf ein Verfahren, bei dem persönliche Daten in einem Dokument erkannt und unkenntlich gemacht werden, wobei den relevanten Elementen Token zugewiesen werden. US 2023/367904 A1 offenbart ein Verfahren zur anonymisierten Bilderfassung in einer Industrieanlage, welches das Erfassen eines Bildes umfasst, das sowohl einen optoelektronisch lesbaren Code als auch ein persönliches Merkmal enthält, wobei das persönliche Merkmal in dem Bild identifiziert und danach unkenntlich gemacht wird. US 2019/354919 A1 lehrt ein System und Verfahren zur Weiterleitung eingehender Pakete, wobei von jedem Paket ein oder mehrere Bilder erfasst und daraus Daten extrahiert werden, die mit einer Mitgliederliste aus einer oder mehreren Datenbanken verglichen werden, um den wahrscheinlichen Empfänger zu ermitteln und diesen zu benachrichtigen.

Es ist daher eine Aufgabe der Erfindung, automatische Arbeitsabläufe in Track- und Trace-Systemen, insbesondere im Logistikbereich, zu verbessern.

Die vorgenannte Aufgabe wird erfindungsgemäß durch die Merkmale der unabhängigen Ansprüche gelöst.

Ein erfindungsgemäßes computerimplementiertes Verfahren zum Anonymisieren personenbezogener Daten für zumindest einen Teil eines Track- und Trace-Systems im Logistikbereich, umfasst das Erhalten von Bilddaten durch zumindest eine Kameraeinheit der Industrieanlage.

Die Kameraeinheit umfasst beispielsweise eine oder mehrere bevorzugt hochauflösende Digitalkameras, die dazu eingerichtet sind, die Bilddaten zu erfassen. Die durch die zumindest eine Kameraeinheit erhaltenen Bilddaten entsprechen zum Beispiel einem oder mehreren vollständigen Bildern von einem oder mehreren Stücken von Fracht und/oder eines oder mehreren Paketen, auf dem bzw. denen sich bevorzugt Versandinformationen befinden. Die Versandinformationen werden z. B. in Form eines Versandetiketts bereitgestellt. Die Bilddaten können einem Schwarz-Weiß-Bild oder einem Farbbild entsprechen. Das eine oder die mehreren Bilder können einer Seitenansicht des einen oder der mehreren Stücke von Fracht und/oder des einen oder der mehreren Paketen entsprechen.

Das Verfahren umfasst ferner das Detektieren zumindest eines relevanten Bereichs in den erhaltenen Bilddaten und nach dem Detektieren des relevanten Bereichs, das Reduzieren der Bilddaten auf einen Bildausschnitt, der zumindest den relevanten Bereich enthält. Ferner umfasst das Verfahren das Erkennen zumindest eines Merkmals in dem detektierten relevanten Bereich, wobei das Merkmal in dem Bildausschnitt erkannt wird, wobei das Merkmal die personenbezogenen Daten charakterisiert, wobei das Merkmal Textinformationen, die die personenbezogenen Daten angeben, und/oder zumindest einen Strichcode und/oder zumindest einen QR-Code, der die personenbezogenen Daten angibt, umfasst.

Das Merkmal kann Text sein (der z. B. handschriftlich oder maschinell erstellt ist), der sowohl personenbezogene Daten als auch nicht personenbezogene Daten angibt, das heißt, das Merkmal kann jegliche Art von Text sein. Alternativ kann das Merkmal Text sein, der ausschließlich personenbezogene Daten angibt. Das Merkmal kann auch ein Strichcode (Barcode) oder allgemein ein maschinenlesbarer Code sein, der personenbezogene Daten angibt.

Das Verfahren umfasst des Weiteren das Entfernen des Merkmals aus den erhaltenen Bilddaten, um eine anonymisierte Version der Bilddaten zu erzeugen. Es ist zu verstehen, dass bei dem Entfernen des Merkmals lediglich das Merkmal entfernt wird, nicht aber in dem Bereich des Merkmals die Bilddaten komplett fehlen. Mit anderen Worten wird das Merkmal, und damit insbesondere die personenbezogenen Daten, unkenntlich gemacht. Das Entfernen des Merkmals aus den erhaltenen Bilddaten kann an die jeweilige datenschutzrechtliche Situation eines Landes angepasst sein, in dem z. B. das erfindungsgemäße Verfahren ausgeführt wird.

Die anonymisierte Version der Bilddaten enthält beispielsweise nur noch (Versand-)Informationen, die keinen datenschutzrechtlichen Bestimmungen unterliegen.

Die anonymisierte Version der Bilddaten entspricht zum Beispiel einem oder mehreren Bildern von einem oder mehreren Stücken von Fracht und/oder eines oder mehreren Paketen, auf dem bzw. denen sich keine personenbezogenen Daten mehr befinden.

Die anonymisierte Version der Bilddaten kann dieselbe Auflösung (d.h. z.B. dieselbe Anzahl Bildpunkte) aufweisen wie die durch die zumindest eine Kameraeinheit der Industrieanlage erhaltenen Bilddaten. Wie später noch genauer erläutert, kann die anonymisierte Version der Bilddaten bis auf die entfernten (z.B. ersetzten oder unkenntlich gemachten) Bereiche den von der Kameraeinheit erhaltenen Bilddaten entsprechen. Dazu kann z.B. lediglich der Bereich des Merkmals mit einem Bereich mit entferntem Merkmal ausgetauscht werden.

Die anonymisierte Version der Bilddaten kann aber auch eine reduzierte Auflösung aufweisen.

In der anonymisierten Version der Bilddaten kann eine Seitenansicht des einen oder mehreren Stücke von Fracht und/der des einen oder der mehreren Pakete vollständig enthalten sein. Beispielsweise enthält die anonymisierte Version der Bilddaten ein oder mehrere vollständige Bilder einer Seite eines oder mehrerer Pakete oder eines oder mehrerer Briefe, auf dem bzw. denen zumindest ein Versandetikett angeordnet ist, aus dem bzw. denen die personenbezogenen Daten entfernt wurden.

Alternativ kann in der anonymisierten Version der Bilddaten zumindest ein Bildausschnitt enthalten sein, der zumindest den zumindest einen detektierten relevanten Bereich in den erhaltenen Bilddaten enthält. Beispielsweise enthält die anonymisierte Version der Bilddaten zumindest einen Bildausschnitt, der zumindest ein Versandetikett (oder nur Versandetiketten) ohne personenbezogene Daten enthält.

Die anonymisierte Version der Bilddaten kann folglich ohne rechtliche Einschränkungen gespeichert und genutzt werden, beispielsweise durch ein Logistikunternehmen. Das Anonymisieren der Bilddaten erfolgt dabei voll automatisch, das heißt ohne eine manuelle Benutzereingabe, was besonders wirtschaftlich und technisch vorteilhaft ist, da große Datenmengen automatisch erzeugt werden können.

Beispielsweise kann die große Menge an anonymisierten Bilddaten bedenkenlos dazu genutzt werden, um automatische Abläufe in einer Industrieanlage im Logistikbereich zu verbessern. Bei den technischen Abläufen kann es sich um das Einlesen von Versandetiketten auf Fracht und/oder Post, das Steuern einer Sortiereinheit der Industrieanlage zum Sortieren der Fracht und/oder Post, das Erkennen zumindest einer Eigenschaft, insbesondere einer geometrischen Form und/oder räumlichen Ausdehnung, der Fracht und/oder Post, die das Porto der Fracht und/oder Post ändert, das Erfassen einer relativen Position der Fracht und/oder Post zueinander und/oder in Bezug auf ein Förderband, das Erkennen von beschädigter Fracht und/oder Post und/oder das Erkennen von unvollständigen und/oder nicht einlesbaren Versandinformationen auf der Fracht und/oder Post handeln. Das Ausführen zumindest eines dieser Abläufe kann durch ein Embedded Device der Industrieanlage erfolgen.

Das Embedded Device der Industrieanlage kann eine künstliche Intelligenz, insbesondere ein künstliches neuronales Netz, umfassen, die speziell dazu eingerichtet bzw. trainiert ist, um zumindest eine der zuvor genannten technischen Abläufe auszuführen. Die anonymisierten Bilddaten können beispielsweise als Trainingsdaten für die künstliche Intelligenz verwendet werden oder es können Trainingsdaten aus den anonymisierten Bilddaten generiert werden. Dadurch, dass aufgrund der zumindest teilweise automatischen Erzeugung der Trainingsdaten ein großer Satz Trainingsdaten zur Verfügung steht, arbeitet die mit diesen Trainingsdaten trainierte künstliche Intelligenz besonders zuverlässig.

Die trainierte künstliche Intelligenz kann insbesondere zumindest einen der zuvor genannten technischen Abläufe besonders fehlerfrei und/oder schnell ausführen. Dies wiederum ermöglicht es, dass die Sortiereinheit die Pakete und/oder Briefe besonders zuverlässig sortieren kann (beispielsweise werden dabei die Pakete und/oder Briefe in verschiedene Bahnen innerhalb eines Lagers eines Logistikunternehmens gelenkt).

Vorteilhafte Ausführungsformen der Erfindung sind in den abhängigen Ansprüchen, der Beschreibung sowie den Zeichnungen angegeben.

Gemäß einer Ausführungsform umfasst das Verfahren ferner das Speichern der erzeugten anonymisierten Version der Bilddaten, bevorzugt auf einem internen Speichermedium der Industrieanlage und/oder einem externen Server. Es kann zum Beispiel eine Datenbank mit einer Vielzahl von anonymisierten Bilddaten erstellt werden.

Gemäß einer Ausführungsform umfasst das Verfahren ferner das Trainieren eines künstlichen neuronalen Netzes der Industrieanlage auf Basis der erzeugten anonymisierten Version der Bilddaten. Das Trainieren kann "supervised" mit "human annotated GT (Ground Truth)" und/oder zumindest teilweise automatisch erfolgen.

Insbesondere umfasst das Trainieren des künstlichen neuronalen Netzes das Erzeugen mehrerer Sätze von Trainingsbilddaten jeweils auf Basis der gespeicherten anonymisierten Versionen von Bilddaten, das sequentielle Zuführen eines jeden Satzes der Trainingsbilddaten zu dem künstlichen neuronalen Netz und das Anpassen von in dem künstlichen neuronalen Netz verwendeten Gewichten und/oder Vorspannungen so lange bis von dem künstlichen neuronalen Netz ermittelte Versandinformationen mit den Referenzversandinformationen, die dem jeweiligen Satz von Trainingsbilddaten zugeordnet sind, zumindest im Wesentlichen übereinstimmt, und das Bereitstellen eines trainierten künstlichen neuronalen Netzes.

Das Erzeugen der mehrerer Sätze von Trainingsbilddaten kann ein Speichern der anonymisierten Versionen der Bilddaten in einer Datenbank umfassen, insbesondere wobei jedem in der Datenbank gespeicherten Satz anonymisierter Bilddaten Metainformationen zugeordnet sind. Insbesondere enthalten die in der Datenbank gespeicherten Sätze anonymisierter Bilddaten keinen Text und/oder Barcode oder dergleichen, der personenbezogene Informationen angibt oder enthält. Andere Teile des Versandetikets können weiterhin enthalten sein. Weiterer Text des Versandetikets kann ebenfalls entfernt und/oder ersetzt sein. Der Rest des Versandobjekts kann unverändert sein.

Das Erzeugen der mehrerer Sätze von Trainingsbilddaten kann des Weiteren ein Vorverarbeiten der in der Datenbank gespeicherten Sätze anonymisierter Bilddaten in ein für das Trainieren des künstlichen neuronalen Netzes passendes Format umfassen.

In der Trainings- oder Lernphase werden dem künstlichen neuronalen Netz nacheinander die zuvor erzeugten Sätze von Trainingsbilddaten zugeführt. Das neuronale Netz ermittelt zu jedem Satz von Trainingsrohdaten einen Satz Paket- und/oder Frachtinformationen. Die von dem neuronalen Netz ermittelten Paket- und/oder Frachtinformationen werden mit Referenz-Paket- und/oder Frachtinformationen verglichen. Wenn beispielsweise beide Informationen voneinander abweichen, werden die in dem neuronalen Netz verwendeten Gewichte und/oder Vorspannungen angepasst und der gleiche Satz von Trainingsbilddaten wird von dem neuronalen Netz erneut verarbeitet. Für jeden Satz von Trainingsrohdaten wird dieser Trainingsschritt so oft durchlaufen, bis die ermittelten Paket- und/oder Frachtinformationen mit den tatsächlichen Referenz-Paket- und/oder Frachtinformationen zumindest im Wesentlichen übereinstimmen.

Bevorzugt wird für das neuronale Netz ein sogenanntes Deep Learning Netz mit zumindest einer, bevorzugt mehr als einer, verdeckten Schicht eingesetzt.

Gemäß einer Weiterbildung umfasst das trainierte künstliche neuronale Netz eine Eingabeschicht, mindestes eine verdeckte Schicht und eine Ausgabeschicht. Dabei sind Neuronen der mindestens einen verdeckten Schicht vollständig mit der Eingabe- und der Ausgabeschicht verbunden oder vernetzt, insbesondere gemäß einer Feed Forward Struktur.

Die Struktur des künstlichen neuronalen Netzes kann bedarfsgerecht gewählt sein. Beispielsweise umfasst das künstliche neuronale Netz eine Objektdetektionsarchitektur, insbesondere YOLOv8, YOLO und/oder RTMDet, zur bevorzugt direkten Erkennung der Lokalisierung eines Absender- und/oder Empfängertextes in nicht-reduzierten Bilddaten von Fracht und/oder Post. Die Eingabeschicht kann eine feste Inputgröße von z.B. 1280x1280 Bildpunkten aufweisen.

Zur Erkennung jeglichen Textes auf Fracht und/oder Post kann das künstliche neuronale Netz eine DBNet Architektur umfassen. Die Bilddaten, in denen das künstliche neuronale Netz mit DBNet Architektur den Text erkennt, kann auf einen Bildbereich eines Versandetiketts zugeschnitten sein.

Das trainierte künstliche neuronale Netz wurde dabei gemäß dem oben beschriebenen Verfahren zum Trainieren des künstlichen neuronalen Netzes trainiert.

Gemäß einer Ausführungsform umfasst das Verfahren des Weiteren das Erhalten von Bilddaten von Fracht und/oder Post, insbesondere durch eine Kameraeinheit der Industrieanlage.

Gemäß einer Ausführungsform umfasst das Verfahren des Weiteren ein Erkennen von Paket- und/oder Frachtinformationen in den erhaltenen Bilddaten durch eine Steuereinheit der Industrieanlage, wobei die Steuereinheit das trainierte künstliche neuronale Netz umfasst. Dadurch, dass das trainierte künstliche neuronale Netz mit einer Vielzahl verschiedener Trainingsbilddaten trainiert wurde, ist es in der Lage, die Paket- und/oder Frachtinformationen besonders zuverlässig und genau zu erkennen.

Die Paket- und/oder Frachtinformationen können Versandinformationen, eine geometrische Form und/oder eine räumliche Ausdehnung der Fracht und/oder Post, die das Porto der Fracht und/oder Post ändern, eine relative Position der Fracht und/oder Post zueinander und/oder in Bezug auf ein Förderband, eine Beschädigung, insbesondere einen Knick, ein Loch und/oder ein Riss in der Fracht und/oder Post, und/oder eine Eigenschaft der Fracht und/oder Post, die die Versandinformationen unvollständig und/oder nicht einlesbar machen, umfassen.

Gemäß einer Ausführungsform umfasst das Verfahren des Weiteren ein Sortieren der Fracht und/oder Post, insbesondere durch eine Sortiereinheit der Industrieanlage, auf Basis der durch das trainierte künstliche neuronale Netz der Steuereinheit erkannten Paket- und/oder Frachtinformationen. Dadurch, dass die Paket- und/oder Frachtinformationen zuvor besonders zuverlässig und genau erkannt wurden, kann die Fracht und/oder Post besonders fehlerfrei sortiert werden.

Insbesondere steht durch das automatische Speichern der anonymisierten Versionen von Bilddaten eine große Menge an Trainingsdatensätzen zum Trainieren des künstlichen neuronalen Netzes zur Verfügung. Die mit diesen Daten trainierte künstliche Intelligenz arbeitet daher besonders genau und zuverlässig. Dies wiederum ermöglicht es, dass die Industrieanlage, insbesondere die Kameraeinheit und/oder die Sortiereinheit, besonders zuverlässig arbeitet. Insbesondere kann die Fracht und/oder Post besonders zuverlässig erfasst, sortiert und/oder weiterverfolgt werden.

Gemäß einer Ausführungsform umfasst das Verfahren ferner das Downsampling der Bilddaten nach dem Erhalten der Bilddaten. Insbesondere wird der relevante Bereich in den heruntergetasteten Bilddaten detektiert. Die heruntergetasteten Bilddaten können effizienter weiterverarbeitet werden.

Gemäß einer Ausführungsform umfasst das Verfahren ferner, nach dem Detektieren des relevanten Bereichs, das Reduzieren ("Cropping") der Bilddaten auf einen Bildausschnitt, der zumindest den relevanten Bereich enthält. Insbesondere erfolgt das Reduzieren ("Cropping") der Bilddaten auf den vor dem Downsampling vorliegenden Bilddaten, z.B. also auf den ursprünglich aufgenommenen Bilddaten. Dadurch wird hier wieder von einer höheren Auflösung ausgegangen. Bevorzugt enthält der Bildausschnitt nur den relevanten Bereich. Das heißt die Anzahl der Pixel wird auf den relevanten Bereich reduziert, aber der relevante Bereich umfasst eine hohe Auflösung. Insbesondere wird das Merkmal in dem Bildausschnitt erkannt. Dadurch müssen weniger Bilddaten verarbeitet werden und die benötigte Auflösung zum Detektieren des Merkmals bleibt erhalten.

Gemäß einer Ausführungsform wird zumindest einer der Schritte des Verfahrens, die nach dem Erhalten der Bilddaten erfolgen, durch eine Steuereinheit der Industrieanlage und/oder eine Recheneinheit der Kameraeinheit ausgeführt. Die Steuereinheit kann ein Industrie-PC der Industrieanlage sein. Das heißt zumindest einer der Schritte des erfindungsgemäßen Verfahrens kann durch ein Embedded Device der Industrieanlage ausgeführt werden.

Gemäß einer Ausführungsform erfolgt das Detektieren des relevanten Bereichs unter Verwendung eines Detektionsalgorithmus und/oder eines Segmentierungsalgorithmus, welcher auf einem neuronalen Netz basiert.

Gemäß einer Ausführungsform erfolgt das Erkennen des Merkmals durch ein Optical-Character-Recognition- (OCR)-System, insbesondere ein OCR-System zur Texterkennung. OCR-Systeme sind etabliert und zuverlässig. Die personenbezogenen Daten werden zum Beispiel durch einen Algorithmus wie Regex ("Regular Expression"), Lookup, NLP ("Natural Language Processing") oder NLP Klassifikationssystem aus den durch das OCR-System erkannten Textdaten herausgefiltert. Reguläre Ausdrücke, auch bekannt als Regex, sind beispielsweise Muster zum Filtern oder Ersetzen bestimmter Zeichenkombinationen in Texten. Der Lookup-Algorithmus verwendet beispielsweise eine Suche ohne Berücksichtigung der Groß-/Kleinschreibung. Mit Hilfe von NLP können unstrukturierte Textdaten automatisch in vordefinierte Kategorien oder Klassen eingeteilt werden.

Gemäß einer Ausführungsform erfolgt das Erkennen des Merkmals durch eine auf semantischer Segmentierung basierenden neuronalen Netzarchitektur. Die semantische Segmentierung wird beispielsweise dazu verwendet, um eine Zusammenstellung von Pixeln zu erkennen, die unterschiedliche Kategorien bilden. Die neuronale Netzarchitektur kann auf einem Dual-Branch-Network- (DBNet)-Algorithmus basieren. Dieser ist besonders gut für die Text- und/oder Bilderkennung geeignet.

Die auf semantischer Segmentierung basierende neuronale Netzarchitektur kann eine binäre Segmentierungsmaske für das Merkmal extrahieren. Beispielsweise wird erkannter Text in einen weißen Schriftzug auf schwarzem Hintergrund umgewandelt. Der erkannte Text kann, muss aber nicht zwingend ausschließlich personenbezogene Daten umfassen.

Die binäre Segmentierungsmaske kann mit einer morphologischen Nachbearbeitung bearbeitet werden, die eine Dilatation mit einem Ellipsoid-Kernel umfasst. Dadurch kann die Wahrscheinlichkeit verringert werden, dass Teile der erkannten Schriftzeichen erhalten bleiben, falls die Segmentierungsmaske den Text nicht vollständig abdeckt. Bei der Dilatation mit dem Ellipsoid-Kernel werden beispielsweise die Ränder von erkannten Textstrukturen verzeichnet.

Das Entfernen des Merkmals aus den erhaltenen Bilddaten kann unter Verwendung der Segmentierungsmaske erfolgen. Insbesondere erfolgt das Entfernen des Merkmals aus den erhaltenen Bilddaten unter Verwendung der nachbearbeiteten Segmentierungsmaske.

Gemäß einer Ausführungsform wird zumindest eine Bounding-Box nach der Nachbearbeitung durch den DBNet-Algorithmus zur Erstellung der binären Maske verwendet. Die binäre Maske kann dann zur Anonymisierung der personenbezogenen Daten verwendet werden kann. Das Erstellen der Bounding-Box kann das Erhalten von Bildkoordinaten des Merkmals umfassen. Dies erlaubt ein schnelles und einfaches Entfernen des Merkmals.

Gemäß einer Ausführungsform umfasst das Entfernen des Merkmals aus den erhaltenen Bilddaten das Anwenden eines (linearen) Box-Filters, das Anwenden eines Gauß-Filters, das Überdecken mit einer Farbmaske, insbesondere Schwärzen, und/oder das Anwenden eines Inpainting-Verfahrens, insbesondere eines auf Deep-Learning basierenden Inpainting-Verfahrens. Inpainting-Verfahren sind Bildverarbeitungsmethoden, die zerstörte oder verlorene Teile eines Bildes rekonstruieren können. Ein (linearer) Box-Filter ist ein Filter, bei dem jedes Pixel im resultierenden Bild einen Wert hat, der dem Durchschnittswert seiner benachbarten Pixel im Eingangsbild entspricht. Ein Gauß-Filter glättet Bilder mit Hilfe einer zweidimensionalen diskreten Annäherung an die Gauß'sche Glockenfunktion. Diese Bildbearbeitungsmethoden eignen sich besonders gut zum Verzeichnen oder gänzlichen Entfernen der personenbezogenen Daten aus den erhaltenen Bilddaten.

Gemäß einer Ausführungsform umfasst das Entfernen des Merkmals aus den erhaltenen Bilddaten die Verwendung lokaler Informationen von Pixeln in der Nähe des relevanten Bereichs zur Bestimmung eines Füllwerts der Anonymisierung.

Gemäß einer Ausführungsform umfasst der relevante Bereich zumindest ein Versandetikett. Das Versandetikett kann auf einem Paket oder einem Couvert angeordnet sein. Das Versandetikett kann ein Aufkleber sein, der auf dem Paket oder Couvert aufgeklebt ist, und/oder das Versandetikett kann direkt auf dem Paket oder Couvert aufgedruckt sein. Zusätzlich oder alternativ umfasst der relevante Bereich zumindest einen Textbereich, der Versandinformationen enthält.

Gemäß einer Ausführungsform umfasst das Merkmal Textinformationen, die die personenbezogenen Daten angeben. Die Textinformationen können ein maschinell oder handschriftlich erzeugter Schriftzug sein. Zusätzlich oder alternativ umfasst das Merkmal zumindest einen Strichcode und/oder zumindest einen QR-Code, der die personenbezogenen Daten angibt.

Gemäß einer Ausführungsform umfasst das Entfernen des Merkmals aus den erhaltenen Bilddaten ein bevorzugt ausschließliches Ersetzen des Merkmals mit einem anderen Merkmal, das keine personenbezogenen Daten charakterisiert.

Insbesondere wird ein Bildausschnitt in den erhaltenen oder gedownsampelten Bilddaten, der personenbezogene Daten enthält, durch einen anderen Bildausschnitt ersetzt, der keine personenbezogenen Daten enthält.

Die anonymisierte Version der Bilddaten kann dieselbe Auflösung aufweisen wie die erhaltenen Bilddaten.

Insbesondere entspricht die anonymisierte Version der Bilddaten den durch die Kameraeinheit erhaltenen Bilddaten, mit dem einzigen Unterschied, dass der das Merkmal enthaltende relevante Bereich durch einen anderen Bereich, der das Merkmal nicht enthält, ersetzt wurde.

Insbesondere entspricht die anonymisierte Version der Bilddaten den durch die Kameraeinheit erhaltenen Bilddaten, mit dem einzigen Unterschied, dass der Bildausschnitt durch einen anderen Bildausschnitt, der das Merkmal nicht enthält, ersetzt wurde.

Der anderen Bereich, insbesondere der andere Bildausschnitt, kann durch eines oder mehrerer der zuvor beschriebenen Bildbearbeitungsverfahren bearbeitet worden sein, insbesondere unter Verwendung der Segmentierungsmaske, durch das Anwenden des Box-Filters, durch das Anwenden des Gauß-Filters, durch das Überdecken mit einer Farbmaske und/oder durch das Anwenden des Inpainting-Verfahrens.

Die Erfindung betrifft auch eine Datenverarbeitungsvorrichtung, die Mittel zur Ausführung des Verfahrens nach zumindest einer der vorherigen Ausführungsformen umfasst. Die Datenverarbeitungsvorrichtung kann Teil der Industrieanlage sein und einen Industrie-PC der Industrieanlage und/oder ein Kamerasystem der Industrieanlage umfassen.

Die Erfindung betrifft auch ein Computerprogrammprodukt umfassend Befehle, die bei der Ausführung des Verfahrens durch die Datenverarbeitungsvorrichtung bewirken, dass die Datenverarbeitungsvorrichtung das Verfahren nach zumindest einem der vorherigen Ausführungsformen ausführt.

Die Erfindung betrifft auch eine Industrieanlage, insbesondere im Logistikbereich, umfassend eine Kameraeinheit, die dazu eingerichtet und ausgebildet ist, Bilddaten von Fracht und/oder Post, insbesondere von Versandetiketten auf Paketen und/oder Briefen, zu erhalten, die Versandinformationen enthalten. Die Versandinformationen umfassen beispielsweise eine Adresse und/oder einen Namen einer natürlichen oder juristischen Person, wobei die Person ein Sender oder Empfänger der Fracht und/oder Post ist.

Die Industrieanlage umfasst des Weiteren eine Sortiereinheit, die dazu eingerichtet und ausgebildet ist, die Fracht und/oder Post auf Basis der Versandinformationen zu sortieren. Dabei wird die Fracht und/oder Post beispielsweise in verschiedene Bahnen innerhalb eines Lagers eines Logistikunternehmens gelenkt.

Die Industrieanlage umfasst ferner eine Steuereinheit umfassend ein trainiertes künstliches neuronales Netz, das dazu eingerichtet und ausgebildet ist, die Versandinformationen in den durch die Kameraeinheit erhaltenen Bilddaten zu erkennen.

Die Steuereinheit kann integraler Bestandteil der Kameraeinheit sein, das heißt die Steuereinheit kann in einem selben Gehäuse wie die Digitalkamera(s) der Kameraeinheit angeordnet sein, oder die Steuereinheit kann eine separate Recheneinheit in Bezug auf die Kameraeinheit sein.

Das neuronale Netz kann auf Basis der durch das erfindungsgemäße Verfahren zum Anonymisieren personenbezogener Daten für eine Industrieanlage erzeugten anonymisierten Version der Bilddaten trainiert sein.

Gemäß einer Ausführungsform umfasst die Industrieanlage ferner eine Transporteinheit, die dazu eingerichtet und ausgebildet ist, die Fracht und/oder Post auf den verschiedenen Bahnen innerhalb des Lages des Logistikunternehmens zu transportieren. Die Transporteinheit umfasst zum Beispiel zumindest ein Förderband und/oder zumindest einen entlang einer Förderschiene beweglichen Greifarm zum Transportieren der Fracht und/oder Post.

Die Erfindung betrifft schließlich ein computerlesbares Medium, auf dem das zuvor genannte Computerprogrammprodukt gespeichert ist.

Die zu dem erfindungsgemäßen Verfahren getroffenen Aussagen gelten für die erfindungsgemäße Datenverarbeitungsvorrichtung, das Computerprogrammprodukt, die Industrieanlage und das computerlesbare Medium entsprechend. Dies gilt insbesondere hinsichtlich Vorteilen und bevorzugten Ausführungsformen. Es versteht sich überdies, dass sämtliche hierin genannten Merkmale miteinander kombinierbar sind, sofern nicht explizit Gegenteiliges angegeben ist.

Nachfolgend wird die Erfindung beispielhaft unter Bezugnahme auf die Zeichnung beschrieben. Es zeigen:
- Fig. 1: ein Flussdiagramm eines erfindungsgemäßen Verfahrens zum Anonymisieren personenbezogener Daten für eine Industrieanlage;
- Fig. 2A-D: eine schematische Darstellung des Verfahrens gemäß Fig. 1;
- Fig. 3: eine schematische Darstellung einer Industrieanlage; und
- Fig. 4: eine schematische Darstellung eines künstlichen neuronalen Netzes.

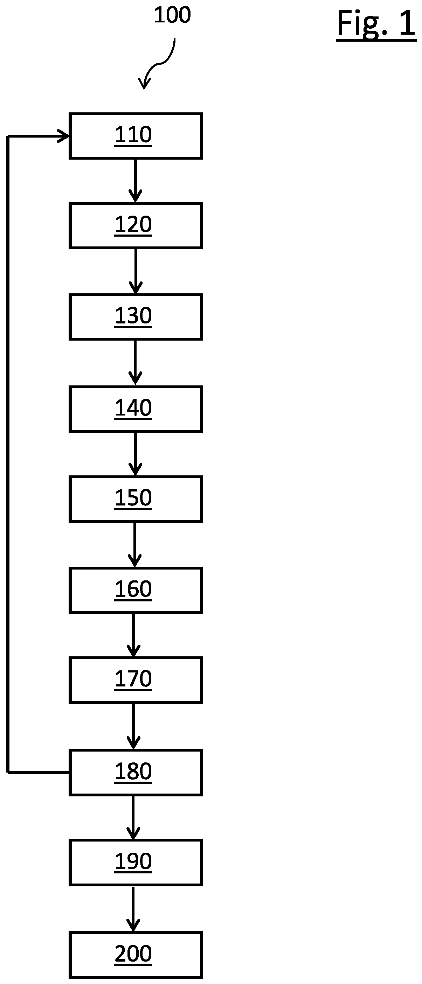

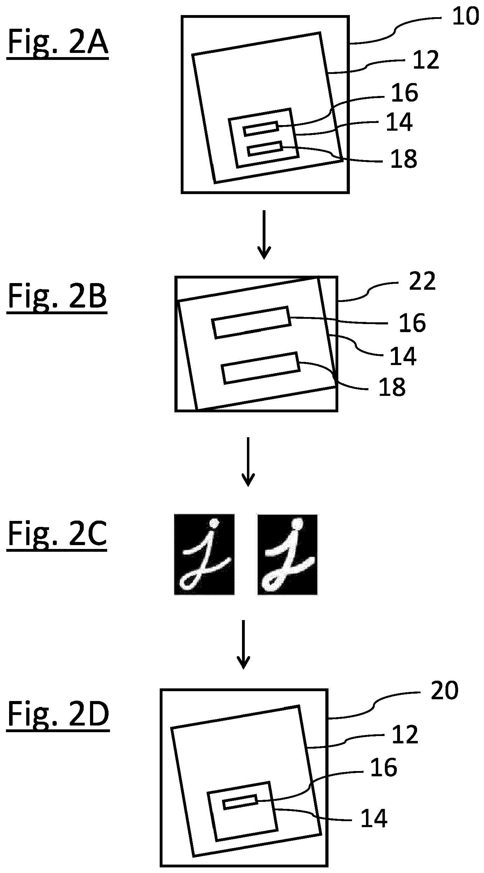

Fig. 1 zeigt ein Flussdiagramm eines erfindungsgemäßen Verfahrens 100 zum Anonymisieren personenbezogener Daten für eine Industrieanlage 200. Das Verfahren 100 beginnt bei Schritt 110, bei dem Bilddaten 10 durch zumindest eine Kameraeinheit 220 der Industrieanlage erhalten werden. In dem in Fig. 2A gezeigten Beispiel enthalten die Bilddaten 10 eine Seite eines Pakets 12, auf dem ein Versandetikett 14 angeordnet ist. Das Versandetikett 14 umfasst ein Merkmal 18 wie zum Beispiel Textinformationen, die die personenbezogenen Daten angeben. Das Versandetikett 14 umfasst ferner nicht personenbezogene Daten 16 wie zum Beispiel eine Briefmarke, einen Strichcode, einen QR-Code und/oder den Namen eines Versandunternehmens oder dergleichen. Die nicht personenbezogenen Daten 16 und die personenbezogenen Daten bilden Versandinformationen. Anstelle eines Pakets 12 kann es sich beispielsweise auch um ein Briefcouvert handeln.

Bei Schritt 120 werden die erhaltenen Bilddaten 10 heruntergetastet. Die heruntergetasteten Bilddaten haben zum Beispiel eine Auflösung von 640x640 Pixel oder 1280x1280 Pixel.

Bei Schritt 130 wird das Versandetikett 14 in den heruntergetasteten Bilddaten 10 detektiert. Dies erfolgt unter Verwendung eines Detektionsalgorithmus, der auf einem neuronalen Netz basiert. Das heißt der Detektionsalgorithmus ist speziell zum Erkennen von Strukturen und/oder Text in Bilddaten ausgelegt.

Bei Schritt 140 werden die Bilddaten 10 auf einen Bildausschnitt 22 reduziert, der zumindest das Versandetikett 14 enthält (siehe Fig. 2B). In einem Fall, in dem mehrere Versandetiketten 12 auf dem Paket 10 angeordnet sind, werden entsprechend mehrere Bildausschnitte 22 erzeugt. Der Bildausschnitt 22 besitzt bevorzugt nicht die heruntergetastete Auflösung, sondern die anfängliche Auflösung der Bilddaten 1.

Bei Schritt 150 wird der Bildausschnitt 22 einer auf semantischer Segmentierung basierenden neuronalen Netzarchitektur zugeführt. Die neuronale Netzarchitektur basiert auf einem Dual-Branch-Network- (DBNet)-Algorithmus. Die neuronale Netzarchitektur erkennt das zumindest eine Merkmal 18 in dem erzeugten Bildausschnitt 22. Insbesondere kann die neuronale Netzarchitektur zwischen dem Merkmal 18 und den nicht personenbezogenen Daten 16 unterscheiden. Das Erkennen des Merkmals 18 kann jedoch auch durch einen anderen geeigneten TextErkennungsalgorithmus erfolgen, beispielsweise durch ein OCR-System zur Texterkennung.

Bei Schritt 160 extrahiert die auf semantischer Segmentierung basierende neuronale Netzarchitektur eine binäre Segmentierungsmaske für das Merkmal 18. Anschließend wird die binäre Segmentierungsmaske mit einem Ellipsoid-Kernel nachbearbeitet. Die binäre Segmentierungsmaske kann für jeden Pixel angeben, ob dort Text vorhanden ist oder nicht. Konkret wird zum Beispiel eine Segmentierungsmaske für einen schwarz-weißen Schriftzug erstellt, wobei der Schriftzug personenbezogene Daten enthält (zum Beispiel einen Sendernamen oder einen Empfängernamen). Danach wird die basierend auf dem Schriftzug erstellte Segmeniterungsmaske verbreitert (siehe Fig. 2C), um beim nachfolgenden Entfernen des Merkmals 18 sicher den Schriftzug vollständig zu entfernen.

Bei Schritt 170 wird das Merkmal 18 aus den ursprünglich erhaltenen Bilddaten 10 entfernt, um eine anonymisierte Version 20 der Bilddaten zu erzeugen, wobei die anonymisierte Version 20 der Bilddaten nur noch Daten 16 enthält, die keiner datenschutzrechtlichen Bestimmung unterliegen (siehe Fig. 2D). Hierzu wird beispielsweise ein Gauß- oder Box-Filter auf die nachbearbeitete Segmentierungsmaske angewendet. Das Merkmal 18 kann aber zum Beispiel auch geschwärzt werden oder mittels eines Inpainting-Verfahrens verändert werden.

Die Schritte 150 bis 170 erfolgen für jeden Bildausschnitt 22, der zumindest ein Merkmal 18 enthält.

Bei Schritt 180 wird die anonymisierte Version 20 der Bilddaten auf einem internen oder externen Speichermedium der Industrieanlage gespeichert. Die Schritte 110 bis 180 können für jedes einer Mehrzahl von Paketen 12 ausgeführt werden, sodass ein Bilddatensatz gespeichert wird, der eine Mehrzahl von anonymisierten Versionen 20 von Bilddaten umfasst.

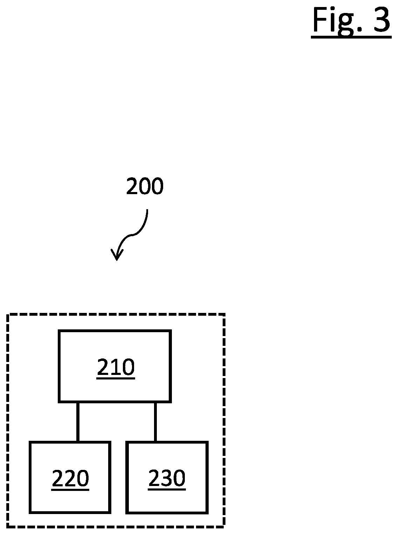

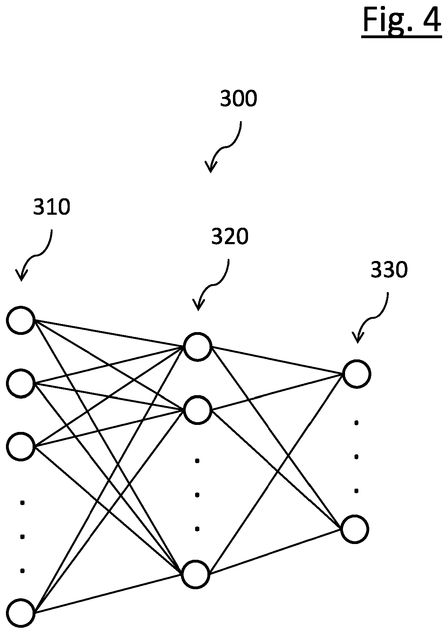

Bei Schritt 190 wird der gespeicherte Bilddatensatz zum Trainieren eines künstlichen neuronalen Netzes 300 (siehe Fig. 4) der Industrieanlage 200 verwendet, das heißt die anonymisierten Versionen 20 der Bilddaten werden als Trainingsdaten verwendet oder es werden Trainingsdatensätze auf Basis der anonymisierten Versionen 20 der Bilddaten erzeugt. Das künstliche neuronale Netz 300 ist beispielswese ein Bild- und/oder Texterkennungsalgorithmus zum automatischen Einlesen und/oder Auswerten von Versandinformationen, die sich auf Paketen 12 oder Briefen befinden. Das künstliche neuronalen Netz 300 kann auf Deep Learning basieren. Das Trainieren des künstlichen neuronalen Netzes 300 kann auf einem Industrie-PC, insbesondere einer Steuereinheit 210, der Industrieanlage 200 oder auf einer externen Recheneinheit erfolgen (siehe Fig. 3).

Das Trainieren des künstlichen neuronalen Netzes 300 umfasst das Erzeugen mehrerer Sätze von Trainingsbilddaten jeweils auf Basis der gespeicherten anonymisierten Versionen 20 von Bilddaten, das sequentielle Zuführen eines jeden Satzes der Trainingsbilddaten zu dem künstlichen neuronalen Netz 300 und das Anpassen von in dem künstlichen neuronalen Netz 300 verwendeten Gewichten und/oder Vorspannungen so lange bis von dem künstlichen neuronalen Netz 300 ermittelte Versandinformationen mit den Referenzversandinformationen, die dem jeweiligen Satz von Trainingsbilddaten zugeordnet sind, zumindest im Wesentlichen übereinstimmt, und das Bereitstellen eines trainierten künstlichen neuronalen Netzes 300.

Bei Schritt 200 wird das trainierte künstliche neuronale Netz 300 angewandt. Insbesondere werden Bilddaten von Paketen 12 oder Briefen durch eine Kameraeinheit 220 der Industrieanlage 200 erhalten und Versandinformationen in den erhaltenen Bilddaten durch eine Steuereinheit 210 der Industrieanlage 200 erkannt, wobei die Steuereinheit 210 das trainierte künstliche neuronale Netz 300 umfasst. Auf Basis der durch das trainierte künstliche neuronale Netz 300 erkannten Versandinformationen wird dann zumindest eine Sortiereinheit 230 und/oder eine Transporteinheit der Industrieanlage 200 gesteuert.

Mit anderen Worten wird in dem erfindungsgemäßen Verfahren 100 mit einem neuronalen Netz ein relevanter Bereich in den Bilddaten erkannt, in dem sich Versandinformationen befinden. Daraufhin wird auf diesem Bereich eine Deep Learning-basierte OCR Lösung angewandt, um Text zu erkennen, der personenbezogene Daten enthält. Der erkannte Text wird dann durch eine geeignete Bildbearbeitungsmethode anonymisiert, beispielswese durch Verzeichnen oder Schwärzen. Die resultierenden Bilddaten ohne personenbezogene Daten können gespeichert und genutzt werden, um Teile der Industrieanlage 200 zu steuern.

Bei dem in Fig. 2A gezeigten Beispiel befindet sich nur ein Versandetikett 14 auf dem Paket 12. Es können aber auch mehrere Versandetiketten 14 auf dem Paket 12 angeordnet sein. Auch kann es sich anstelle eines Pakets 12 um einen Brief oder ein Couvert oder dergleichen handeln, das heißt es kann sich um jegliche Art von Fracht oder Post handeln.

In dem erfindungsgemäßen Verfahren 100 werden die durch die Kameraeinheit 220 erhaltenen Bilddaten 10 an einen Industrie-PC oder ein Embedded Device der Industrieanlage 200 übermittelt. Dieser führt dann zumindest das Detektieren 130 des zumindest einen relevanten Bereichs, das Erkennen 150 des zumindest einen Merkmals 18 in dem relevanten Bereich, und das Entfernen 170 des Merkmals 18 aus den erhaltenen Bilddaten 10 aus. Es ist aber auch denkbar, dass die Kameraeinheit 220 selbst eine Recheneinheit umfasst, die zumindest das Detektieren 130 des zumindest einen relevanten Bereichs, das Erkennen 150 des zumindest einen Merkmals 18 in dem detektierten relevanten Bereich, und das Entfernen 170 des Merkmals 18 aus den erhaltenen Bilddaten 10 ausführt.

Die Schritte 120, 140, 160 und 180 bis 200 des erfindungsgemäßen Verfahrens 100 sind optional.

Die in Fig. 3 schematisch dargestellte Industrieanlage 200 umfasst eine Steuereinheit 210, eine Kameraeinheit 220 und eine Sortiereinheit 230. In dem gezeigten Ausführungsbeispiel ist die Steuereinheit 210 eine baulich separate Einheit in Bezug auf die Kameraeinheit 220 und die Sortiereinheit 230. Die Steuereinheit 210 kann aber auch durch eine Recheneinheit der Kameraeinheit 220 und/oder der Sortiereinheit 230 verwirklicht sein (nicht gezeigt).

Die Kameraeinheit 220 umfasst zumindest eine bevorzugt hochauflösende Digitalkamera ist dazu eingerichtet, Bilddaten von Versandetiketten 14 auf einem Paket 12 oder Brief oder Bilddaten eines Bereichs eines Pakets 12 oder Briefs, auf dem sich zum Beispiel handschriftlich oder maschinell aufgebrachte Versandinformationen befinden, zu erhalten. Die Kameraeinheit 220 kann sowohl zum Erhalten der zu anonymisierenden Bilddaten 10 als auch zum Erhalten der Bilddaten zum Sortieren von Paketen 12 eingerichtet sein. Das heißt die Kameraeinheit 220 kann zum Erzeugen der Trainingsdaten und zum Steuern der Industrieanlage 200 genutzt werden.

Die Steuereinheit 210 umfasst das trainierte künstliche neuronale Netz 300 (siehe Fig. 4) und ist dazu eingerichtet, die von der Kameraeinheit 220 erhaltenen Bilddaten auszuwerten, das heißt die Versandinformationen aus den Bilddaten zu extrahieren. Die Steuereinheit 210 kann des Weiteren dazu eingerichtet sein, auf Basis der Versandinformationen die Sortiereinheit 230 zu steuern. Die Steuereinheit 210 kann auch zum Erzeugen der mehreren Sätze von Trainingsbilddaten zum Trainieren des künstlichen neuronalen Netzes 300 eingerichtet sein.

Die Industrieanlage 200 kann des Weiteren eine Transporteinrichtung zum Transport von Paketen 12 und/oder Briefen umfassen (nicht gezeigt). Die Transporteinrichtung umfasst beispielsweise ein oder mehrere Förderbänder zum Transportieren von Paketen innerhalb eines Lagers eines Logistikunternehmens. Die Sortiereinheit 230 kann entsprechend dazu ausgelegt sein, die Pakete 12 den verschiedenen Förderbändern der Transporteinheit zuzuordnen.

Die Sortiereinheit 230 umfasst beispielsweise einen Schwenk- und/oder Greifarm zum Verschieben und/oder Anheben und Versetzen eines Pakets 12 von einem Transportband der Transporteinrichtung zu einem anderen Transportband der Transporteinrichtung.

Das in der Fig. 4 schematisch dargestellte künstliche neuronale Netz 300 umfasst eine Eingabeschicht 310 mit mehreren Neuronen, zumindest eine verdeckte Schicht 320 mit mehreren Neuronen, und eine Ausgabeschicht 330 mit einem oder mehreren Neuronen. Die Neuronen benachbarter Schichten sind jeweils vollständig miteinander vernetzt. In dem gezeigten Ausführungsbeispiel umfasst das neuronale Netz 300 genau eine verdeckte Schicht 320. Das neuronale Netz 300 kann aber auch zwei oder mehr verdeckte Schichten umfassen.

Beim Erkennen von Versandinformationen in Bilddaten z. B. eines Versandetiketts 14 wird jedem Neuron der Eingabeschicht 310 ein Pixelwert der Bilddaten zugeführt. Somit hat die Eingabeschicht 310 des künstlichen neuronalen Netzes 300 eine Anzahl an Neuronen, die mindestens der Anzahl der Pixel des durch die Kameraeinheit 220 erhaltenen Bildes entspricht. Werden die Bilddaten mittels downsampling vorverarbeitet, hat die Eingabeschicht 310 entsprechend eine geringere Anzahl an Neuronen.

### Bezugszeichenliste

- 10: Bilddaten
- 12: Paket
- 14: Versandetikett
- 16: nicht personenbezogene Daten
- 18: Merkmal
- 20: anonymisierte Version der Bilddaten
- 22: Bildausschnitt
- 200: Industrieanlage
- 210: Steuereinheit
- 220: Kameraeinheit
- 230: Sortiereinheit
- 300: neuronales Netz
- 310: Eingabeschicht
- 320: verdeckte Schicht
- 330: Ausgabeschicht

## Patentansprüche

1. Computerimplementiertes Verfahren (100) zum Anonymisieren personenbezogener Daten für zumindest einen Teil eines Track- und Trace-Systems im Logistikbereich, das Verfahren (100) umfassend:
Erhalten (110) von Bilddaten (10) durch zumindest eine Kameraeinheit (220) der Industrieanlage (200);
Detektieren (130) zumindest eines relevanten Bereichs in den erhaltenen Bilddaten (10);
nach dem Detektieren (130) des relevanten Bereichs, Reduzieren (140) der Bilddaten auf einen Bildausschnitt (22), der zumindest den relevanten Bereich enthält;
Erkennen (150) zumindest eines Merkmals (18) in dem detektierten relevanten Bereich, wobei das Merkmal (18) in dem Bildausschnitt (22) erkannt (150) wird, wobei das Merkmal (18) die personenbezogenen Daten charakterisiert, wobei das Merkmal (18) Textinformationen, die die personenbezogenen Daten angeben, und/oder zumindest einen Strichcode und/oder zumindest einen QR-Code, der die personenbezogenen Daten angibt, umfasst;
Entfernen (170) des Merkmals (18) aus den erhaltenen Bilddaten (10), um eine anonymisierte Version (20) der Bilddaten zu erzeugen.

2. Verfahren (100) nach Anspruch 1, ferner umfassend,
nach dem Erhalten (110) der Bilddaten, Downsampling (120) der Bilddaten (10), insbesondere wobei der relevante Bereich in den gedownsampelten Bilddaten detektiert (130) wird.

3. Verfahren (100) nach zumindest einem der vorherigen Ansprüche,
wobei zumindest einer der Schritte des Verfahrens (100), die nach dem Erhalten (110) der Bilddaten (10) erfolgen, durch eine Steuereinheit (210) der Industrieanlage (200), insbesondere einen Industrie-PC der Industrieanlage (200), und/oder eine Recheneinheit der Kameraeinheit (220) ausgeführt wird.

4. Verfahren (100) nach zumindest einem der vorherigen Ansprüche,
wobei das Detektieren (130) des relevanten Bereichs unter Verwendung eines Detektionsalgorithmus erfolgt, welcher auf einem neuronalen Netz basiert.

5. Verfahren (100) nach zumindest einem der vorherigen Ansprüche,
wobei das Erkennen (150) des Merkmals durch ein Optical-Character-Recognition- (OCR)-System, insbesondere ein OCR-System zur Texterkennung, erfolgt.

6. Verfahren (100) nach zumindest einem der vorherigen Ansprüche,
wobei das Erkennen (150) des Merkmals durch eine auf semantischer Segmentierung basierende neuronale Netzarchitektur, die insbesondere auf einem Dual-Branch-Network- (DBNet)-Algorithmus basiert, erfolgt.

7. Verfahren (100) nach Anspruch 6,
wobei die auf semantischer Segmentierung basierende neuronale Netzarchitektur eine binäre Segmentierungsmaske für das Merkmal extrahiert, insbesondere wobei die binäre Segmentierungsmaske mit einer morphologischen Nachbearbeitung (160), die eine Dilatation mit einem Ellipsoid-Kernel umfasst, bearbeitet wird.

8. Verfahren (100) nach Anspruch 7,
wobei das Entfernen (170) des Merkmals (18) aus den erhaltenen Bilddaten (10) unter Verwendung der Segmentierungsmaske, insbesondere der nachbearbeiteten Segmentierungsmaske, erfolgt.

9. Verfahren (100) nach zumindest einem der vorherigen Ansprüche,
wobei das Entfernen (170) des Merkmals (18) aus den erhaltenen Bilddaten (10) das Anwenden eines Box-Filters, das Anwenden eines Gauß-Filters, das Überdecken mit einer Farbmaske, insbesondere Schwärzen, und/oder das Anwenden eines Inpainting-Verfahrens, insbesondere eines auf Deep-Learning basierenden Inpainting-Verfahrens, umfasst.

10. Verfahren (100) nach zumindest einem der vorherigen Ansprüche,
wobei der relevante Bereich zumindest ein Versandetikett (14), welches insbesondere auf einem Paket (12) oder einem Couvert angeordnet ist, umfasst.

11. Verfahren (100) nach zumindest einem der vorherigen Ansprüche,
wobei die anonymisierte Version (20) der Bilddaten den durch die Kameraeinheit (220) erhaltenen Bilddaten (10) entspricht, wobei lediglich der das Merkmal (18) enthaltende relevante Bereich, insbesondere der das Merkmal (18) enthaltende Bildausschnitt (22), durch einen anderen Bereich, der das Merkmal (18) nicht enthält, insbesondere einen anderen Bildausschnitt, der das Merkmal (18) nicht enthält, ersetzt wird.

12. Datenverarbeitungsvorrichtung, die Mittel zur Ausführung des Verfahrens (100) nach zumindest einem der Ansprüche 1 bis 11 umfasst, insbesondere wobei die Datenverarbeitungsvorrichtung Teil der Industrieanlage (200) ist und einen Industrie-PC der Industrieanlage (200) und/oder ein Kamerasystem der Industrieanlage (200) umfasst.

13. Computerprogrammprodukt, umfassend Befehle, die bei der Ausführung des Verfahrens (100) durch die Datenverarbeitungsvorrichtung gemäß Anspruch 12 bewirken, dass die Datenverarbeitungsvorrichtung das Verfahren (100) nach zumindest einem der Ansprüche 1 bis 11 ausführt.

## Claims

1. A computer-implemented method (100) for anonymizing personal data for at least a part of a track-and-trace system in the logistics sector, the method (100) comprising:
receiving (110) image data (10) via at least one camera unit (220) of the industrial plant (200);
detecting (130) at least one relevant region in the received image data (10);
after detecting (130) the relevant region, reducing (140) the image data to an image section (22) which includes at least the relevant region;
recognizing (150) at least one feature (18) in the detected relevant region, wherein the feature (18) is recognized (150) in the image section (22), wherein the feature (18) characterizes the personal data, wherein the feature (18) comprises text information, which specifies the personal data, and/or at least one barcode and/or at least one QR code which specifies the personal data;
removing (170) the feature (18) from the received image data (10) to generate an anonymized version (20) of the image data.

2. A method (100) according to claim 1, further comprising,
after receiving (110) the image data, downsampling (120) the image data (10), in particular wherein the relevant region is detected (130) in the downsampled image data.

3. A method (100) according to at least one of the preceding claims,
wherein at least one of the steps of the method (100) that take place after receiving (110) the image data (10) is executed by a control unit (210) of the industrial plant (200), in particular an industrial PC of the industrial plant (200), and/or a processing unit of the camera unit (220).

4. A method (100) according to at least one of the preceding claims,
wherein the detection (130) of the relevant region takes place using a detection algorithm which is based on a neural network.

5. A method (100) according to at least one of the preceding claims,
wherein the recognition (150) of the feature takes place via an optical character recognition (OCR) system, in particular an OCR system for text recognition.

6. A method (100) according to at least one of the preceding claims,
wherein the recognition (150) of the feature takes place using a neural network architecture which is based on semantic segmentation and which is in particular based on a Dual-Branch Network (DBNet) algorithm.

7. A method (100) according to claim 6,
wherein the neural network architecture based on semantic segmentation extracts a binary segmentation mask for the feature, in particular wherein the binary segmentation mask is processed using a morphological post-processing (160) which comprises a dilation with an ellipsoid kernel.

8. A method (100) according to claim 7,
wherein the removal (170) of the feature (18) from the received image data (10) takes place using the segmentation mask, in particular the post-processed segmentation mask.

9. A method (100) according to at least one of the preceding claims,
wherein the removal (170) of the feature (18) from the received image data (10) comprises applying a box filter, applying a Gaussian filter, masking with a color mask, in particular blackening, and/or applying an inpainting method, in particular a deep learning-based inpainting method.

10. A method (100) according to at least one of the preceding claims,
wherein the relevant region comprises at least one shipping label (14) which is in particular arranged on a package (12) or an envelope.

11. A method (100) according to at least one of the preceding claims,
wherein the anonymized version (20) of the image data corresponds to the image data (10) received by the camera unit (220), wherein only the relevant region including the feature (18), in particular the image section (22) including the feature (18), is replaced by another region which does not include the feature (18), in particular another image section which does not include the feature (18).

12. A data processing device which comprises means for executing the method (100) according to at least one of the claims 1 to 11, in particular wherein the data processing device is part of the industrial plant (200) and comprises an industrial PC of the industrial plant (200) and/or a camera system of the industrial plant (200).

13. A computer program product comprising commands which, when the method (100) is executed by the data processing device according to claim 12, cause the data processing device to execute the method (100) according to at least one of the claims 1 to 11.

## Revendications

1. Procédé mis en œuvre par ordinateur (100) destiné à anonymiser des données à caractère personnel pour au moins une partie d'un système de suivi et de traçabilité dans le domaine de la logistique, le procédé (100) comprenant :
la réception (110) de données d'image (10) par au moins une unité de caméra (220) de l'installation industrielle (200) ;
la détection (130) d'au moins une zone pertinente dans les données d'image (10) obtenues ;
après la détection (130) de la zone pertinente, la réduction (140) des données d'image à un extrait d'image (22) contenant au moins la zone pertinente ;
reconnaissance (150) d'au moins une caractéristique (18) dans la zone pertinente détectée, ladite caractéristique (18) étant reconnue (150) dans l'extrait d'image (22), ladite caractéristique (18) caractérisant les données à caractère personnel, ladite caractéristique (18) comprenant des informations textuelles indiquant les données à caractère personnel, et/ou au moins un code-barres et/ou au moins un code QR indiquant les données à caractère personnel ;
suppression (170) de la caractéristique (18) des données d'image obtenues (10) afin de générer une version anonymisée (20) des données d'image.

2. Procédé (100) selon la revendication 1, comprenant en outre, après la réception (110) des données d'image, un sous-échantillonnage (120) des données d'image (10), la zone pertinente étant notamment détectée (130) dans les données d'image sous-échantillonnées.

3. Procédé (100) selon au moins l'une des revendications précédentes, dans lequel au moins l'une des étapes du procédé (100) qui ont lieu après la réception (110) des données d'image (10) est exécutée par une unité de commande (210) de l'installation industrielle (200), en particulier un PC industriel de l'installation industrielle (200), et/ou une unité de calcul de l'unité de caméra (220).

4. Procédé (100) selon au moins l'une des revendications précédentes, dans lequel la détection (130) de la zone pertinente s'effectue à l'aide d'un algorithme de détection basé sur un réseau neuronal.

5. Procédé (100) selon au moins l'une des revendications précédentes, dans lequel la reconnaissance (150) de la caractéristique s'effectue à l'aide d'un système de reconnaissance optique de caractères (OCR), en particulier un système OCR destiné à la reconnaissance de texte.

6. Procédé (100) selon au moins l'une des revendications précédentes, dans lequel la reconnaissance (150) de la caractéristique s'effectue à l'aide d'une architecture de réseau neuronal basée sur la segmentation sémantique, qui repose notamment sur un algorithme de réseau à double branche (DBNet).

7. Procédé (100) selon la revendication 6, dans lequel l'architecture de réseau neuronal basée sur la segmentation sémantique extrait un masque de segmentation binaire pour la caractéristique, en particulier dans lequel le masque de segmentation binaire est traité par un post-traitement morphologique (160) comprenant une dilatation avec un noyau ellipsoïdal.

8. Procédé (100) selon la revendication 7, dans lequel la suppression (170) de la caractéristique (18) des données d'image obtenues (10) s'effectue à l'aide du masque de segmentation, en particulier du masque de segmentation retravaillé.

9. Procédé (100) selon au moins l'une des revendications précédentes, dans lequel la suppression (170) de la caractéristique (18) des données d'image obtenues (10) comprend l'application d'un filtre de type « box », l'application d'un filtre gaussien, le recouvrement par un masque de couleur, en particulier le noircissement, et/ou l'application d'un procédé d'inpainting, en particulier d'un procédé d'inpainting basé sur l'apprentissage profond.

10. Procédé (100) selon au moins l'une des revendications précédentes, dans lequel la zone concernée comprend au moins une étiquette d'expédition (14), qui est notamment disposée sur un colis (12) ou une enveloppe.

11. Procédé (100) selon au moins l'une des revendications précédentes, dans lequel la version anonymisée (20) des données d'image correspond aux données d'image (10) obtenues par l'unité de caméra (220), seule la zone pertinente contenant la caractéristique (18), en particulier l'extrait d'image (22) contenant la caractéristique (18), étant remplacée par une autre zone ne contenant pas la caractéristique (18), en particulier un autre extrait d'image ne contenant pas la caractéristique (18).

12. Dispositif de traitement de données comprenant des moyens pour mettre en œuvre le procédé (100) selon au moins l'une des revendications 1 à 11, en particulier dans lequel le dispositif de traitement de données fait partie de l'installation industrielle (200) et comprend un PC industriel de l'installation industrielle (200) et/ou un système de caméras de l'installation industrielle (200).

13. Produit programme d'ordinateur comprenant des instructions qui, lors de l'exécution du procédé (100) par le dispositif de traitement de données selon la revendication 12, font en sorte que le dispositif de traitement de données exécute le procédé (100) selon au moins l'une des revendications 1 à 11.
